# EUROPEAN PATENT APPLICATION

(11) **EP 1 825 762 A1**
(43) Date of publication of application: **29.08.2007**
(21) Application number: 06075460.3
(22) Date of filing: 28.02.2006
(51) Int. Cl.: A23K 1/16, A23K 1/175, A23K 1/00

(54) **Coated animal feed with active compounds**

(71) Applicant: NUTRECO NEDERLAND B.V., 5831 JN Boxmeer (NL)
(72) Inventor: Vrij, Marleen, 5831 JN Boxmeer (NL)
(74) Representative: Winckels, Johannes Hubertus F.

(57) **Abstract**

The invention is directed to an animal feed comprising active compounds. According to the present invention the active compounds are strongly adhered to the feed by means of a fat coating and the animal feed has a low coating content. The coating of the present invention comprises a fat blend of at least two lipid components, wherein at least one of the lipid components comprises a hardening lipid, and wherein the lower limit of the crystallization range of said blend is above room temperature.

## Description

The invention is directed to an animal feed comprising active compounds.

Animal feed is produced from different raw materials and additives in a feed factory. When active compounds are required in the feed, they are usually added in the main mixer of the production process. This has several disadvantages since many active compounds are sensitive to the high temperatures and other process conditions of the feed production process. Even more important, addition in the main mixer can lead to carry-over and cross contamination of the active compounds into next feed batches.

The term "carry-over" in this respect means that the active compound of a first production batch of animal feed contaminates the production facility and partially ends up in the next production batch of animal feed. Often carry-over leads to impurities in the final products. In particular, this is undesirable when the active compounds are additives like therapeutics, prophylactics, vitamins, enzymes, and other active compounds.

To overcome these problems it has been suggested to add the active compounds after production, for example just before loading and transportation or even in a later phase, e.g. at the farm.

It is very desirable to have the active compounds adhered to the animal feed in such a way that they remain evenly distributed and adhered during loading, transportation and delivery to the trough.

A typical method which is used for adhering active compounds on animal feed is by providing a fat and oil coating. EP-A-0 682 874 describes a bioactive feed pellet comprising a primary fat coating with a bioactive ingredient and a secondary fat coating which has been applied after the application of the primary coating. A suspending aid is used to provide dispersion and/or emulsion and/or solution properties of the bioactive compound. The suspension aid consists of a triglyceride and/or a fatty acid thereof having a melting point above 35 °C.

A disadvantage of the prior art fat coatings is that the amount of fat coating with respect to the feed pellet is relatively high. Normally, the coating content of the coated feed pellet is about 2 wt.% with respect to the total weight of the coated feed pellet in order to effectively adhere the active compounds to the feed pellets. This high fat content is particularly disadvantageous for diseased animals.

A further disadvantage of the prior art fat coated feed particles is the relatively bad adherence of the active compounds. By the time that the animal feed has been loaded and transported to the farm, a large part of the active compounds has released from the feed pellets and is present in the dust. This can cause a problem for picky animals and, more importantly, may cause health problems for the farmer.

An object of the present invention is therefore to provide an animal feed comprising active compounds, wherein the active compounds are adhered to the feed with a fat coating and wherein the coated feed has a low coating content. A further object is to provide a fat blend having improved crystallization behavior, in particular an increased crystallization rate.

It was found that this object can be met by an animal feed, which comprises at least one active compound and a coating for adhering the at least one active compound to the animal feed, wherein the coating comprises a blend of at least two lipid components, wherein at least one of the lipid components comprises a hardening lipid, and wherein the lower limit of the crystallization range of said blend is above room temperature. Preferably the lower limit of the crystallization range is above 35 °C.

The term "lipid" as used herein refers to any of a group of organic compounds, including the fats, oils, waxes, sterols, and triglycerides, that are insoluble in water but soluble in nonpolar organic solvents and are oily to the touch.

The hardening lipid is preferably a fully hydrogenated fat, a wax, or combinations thereof.

In accordance with the present invention the fat blend preferably comprises from 1 wt.% to 50 wt.% of the hardening lipid, more preferably from 2 to 25 wt.%.

Surprisingly, it was found that the coating of the present invention increases the durability and abrasiveness of the feed. The animal feed of the invention is able to resist the abrasive forces and shearing forces that occur during transportation from the factory to the farm.

The coating layer of the invention is hard and durable, but not brittle.

The coating fat blend of the present invention provides for the following benefits and advantages:
1. active particles are firmly captured on the feed particles;
2. the feed particles have the right hardness and durability;
3. during the coating process, the crystallization rate of the blend is such that the coating solidifies rapidly, by which the active particles are captured before the feed particles collide with each other.

In addition, the inventors surprisingly found that, in comparison to the prior art animal feed, less coating is required for adhering the active compounds to the feed when applying the hardening lipid in the fat blend for the coating in accordance with the present invention.

Furthermore, it was found that the coating of the invention results in a better adherence of the active compounds to the feed, thereby reducing or even preventing contamination and carry-over during the production process.

The fat blend of the present invention preferably comprises from 1 wt.% to 50 wt.% of a fully hydrogenated fat and/or wax. Very good results have been obtained with a fully hydrogenated fat obtained from rape seed oil

Fully hydrogenated rapeseed oil is a mixture of triglycerides in which the fatty acid composition is a mixture of saturated fatty acids. The fatty acids are present in the same proportions which result from the full hydrogenation of fatty acids occurring in natural rapeseed oil. The rapeseed oil is obtained from the napus and campestris varieties of Brassica of the family Cruciferae. It is prepared by fully hydrogenating refined and bleached rapeseed oil typically at 150 - 200 °C, using a catalyst such as nickel, until the iodine number is about 4 or less.

The lower crystallization point of the fully hydrogenated fat is preferably above 35 °C, and more preferably above 50 °C. From a practical point of view, a crystallization point of more than 65 °C is not desirable. Suitable waxes for use in the fat blend include, but are not limited to, carnauba, candilla, Japan and lanolin wax.

Preferably, the fat blend further comprises a vegetable oil, such as soybean oil, palm oil, sunflower oil, palm kernel oil, palm oil fatty acids, corn oil, coconut oil, linseed oil. The fat blend may also comprise an animal fat, such as fish oil, chicken fat, tallow, or lard. The crystallization range of the fat blend may be adjusted by changing the ratio of the fully hydrogenated fat and/or wax with the vegetable oil and/or animal fat. The lower limit of the crystallization range of the fat blend should be above 35 °C.

If the lower limit of the crystallization range is at a temperature higher than 65 °C, the fat blend may solidify too fast and by which it would become difficult to obtain a good coating. On the other hand, if the crystallization range initiates at a temperature lower than 20 °C, the fat blend may not solidify at all, or solidify too slowly.

The coating typically covers the feed particles in the feed according to the present invention more or less homogeneously. Typical coating thicknesses vary from 1 to 75 µm, *e.g.* from 2 to 30 µm. Typically the feed according to the invention comprises about 0.1 to 7.5 wt.% coating material, preferably from 0.2 to 3 wt.%, more preferably from 0.25 to 2 wt.%.

The weight ratio between vegetable oil and/or animal fat on the one hand and the hardening lipid on the other hand is typically from 99:1 to 10:90, depending on the crystallization range of the vegetable and/or animal fat. The weight ratio typically also depends on the initial composition, in particular the relative amounts of oil or fat therein. Generally, more hardening fat will have to be added to the blend to obtain a suitable lipid mixture with oil than with a fat. The crystallization of an oil is much lower than that of a fat.

The inventors found that good results are obtained when the animal feed comprises at least 0.2 wt.% to 3 wt.% of coating. It is generally not preferred that the coating content of the animal feed is more than 3 wt.%. Preferably, the animal feed comprises between 0.5 wt.% and 2 wt.% of coating, more preferably between 0.7 wt.% and 1.0 wt.%.

The at least one active compound may be any kind of active compound that is applicable to animal feed. For instance, the at least one active compound can be a therapeutic, a prophylactic, a vitamin, an enzyme, a yeast, and any other drug or additive that has a curing capacity or improves the performance of the animals, such as breeding performance, or milk production. Combinations of different kinds of active compounds are also included in the invention.

The active compound may be a liquid or a solid. If the active compound is a solid, it is preferred that the solid is in the form of small particles with a size of from 1 µm to 2 000 µm, preferably from 50 µm to 200 µm.

The amount of active compound per feed dosage may vary in a wide range. Depending on the needs, it can have any value, but generally the amount is limited to an upper limit of about 5 wt.% with respect to the coating. When the amount of active compound is higher, it may interfere with the formation of the coating.

The invention also relates to a method for manufacturing an animal feed according to the invention comprising the steps of:
- providing an animal meal;
- producing animal feed of the meal (pellets, crumbles or meal) and distributing them to a mixing device;
- mixing the at least one active compound with the animal feed;
- heating the fat blend above the melting range of the fat blend; and
- spraying the mix of at least one active compound with the fat blend over the animal.

In a typical production process the animal feed is dosed in a mixer, together with at least one active compound. Subsequently, the fat blend is heated above the melting range. The heating temperature is typically between 50 °C and 95 °C. Then, the heated mixture of fat blend is sprayed over the animal feed. Finally, the coated animal feed may be actively cooled until below the crystallization range of the fat blend. Alternatively, the feed may be left until the coating has hardened by itself.

The present inventors found that the crystallization speed is very important. By using the hardening lipid in accordance with the present invention it is possible to accelerate the crystallization tremendously compared to a slow hardening coating fat. Another advantageous effect of the hardening lipid of the invention is that a fat-gel is created. This fat-gel is a very durable layer on the surface of the feed that is able to withstand the abrasive forces during transport. A fat-gel is a mixture of liquid and solid lipids, wherein the high-melting lipid forms a solidified network, which encapsulates the liquid lower melting lipid. Fat-gels results in increased structure, firmness and viscosity compared to the liquid lipid alone. Without wishing to be bound by theory, the present inventors believe that the formation of a fat-gel explains why in accordance with the present invention a relatively small amount of hardening lipid suffices to obtain a dramatic increase in mechanical hardness.

In a further aspect, the invention relates to the use of a hardening lipid with a melting point above 50 °C, preferably above 65 °C as an adherent for at least one active compound on animal feed.

Table 1 below, shows typical crystallization temperatures of pure fats and fat blends comprising fully hydrogenated rape seed oil (referred to as "FHR"). The FHR crystallizes at a temperature of 69 °C. Pure palm oil crystallizes at a temperature of 22 °C.

**Table 1. Crystallization temperature of various FHR/palm oil blends**

| Level of FHR (wt.%) | Crystallization Temp (°C) |
|---|---|
| 100 | 69 |
| 75 | 68.6 |
| 50 | 68.1 |
| 25 | 59.8 |
| 10 | 51.1 |
| 5 | 44.2 |
| 2 | 28.8 |
| 0 | 22.0 |

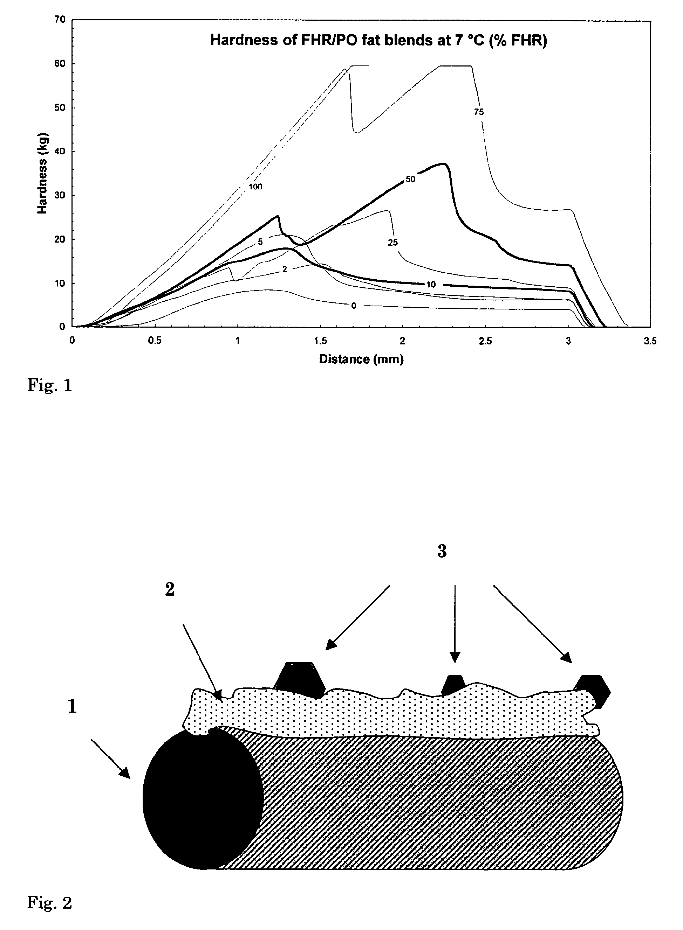

Figure 1 shows the effect of adding a fully hydrogenated fat (FHR) to palm oil on the hardness of the coating. In Figure 1 the numbers for each curve represent the weight percentage fully hydrogenated rapeseed oil of the total blend, 100 being pure fully hydrogenated rapeseed oil and 0 being pure palm oil. It can be seen that the addition of only 2 % fully hydrated fat has a large impact on the hardness (maximum force) of the fat blend. Measurements were carried out at 7 °C using a Texture Analyzer (Stable Micro Systems). The fats or fat blends were first melted and allowed to solidify at room temperature. Than, the fats/fat blends were stored for one day at 7 °C. One by one the samples were tested for their resistance to compression. The maximum force (maximum hardness) to deform the fat was analyzed with the use of 10 mm probe at a test speed of 1 mm/s. The curves in Figure 1 have been recorded by monitoring the pressure that is exerted on the probe, while it travels at a constant speed of 1 mm/s through the sample. Typically, a peak in such a curve is associated with breakage. Thus the peaks observed in Figure 1, confirm that the blends of the present invention are in the form of a fat-gel.

In Figure 2 a schematic representation of coating layer 2 on top of feed 1 is given. Active compounds 3 are attached to the feed in accordance with the present invention by coating 2.

The invention will now be further elucidated by the following illustrative, non-limiting examples.

### Examples

### Example 1

Fish feed pellets were coated with an active compound (an iron-particle tracer, at an inclusion level of 4000 ppm) and were subjected to the Pfost test, a transport simulation test for measuring pellet durability, which involves measuring the level of dust and fines after a 500 times tumbling test (Pfost, Harry, Feed Production School Proceedings, KSU, 1962). Five hundred grams of pellets were weighed and put into the tumbling device. After the tumbling the fines and dust were screened off. The loss of weight was taken as representative for the fines and dust. The difference in weight before and after the simulation test is called the Pellet Durability Index. The recovery of the active compound was analyzed in the feed (not in the fines and dust particles). The results are given in Table 2.

The recovery of the active compound was calculated by taking the analysed level of tracer after the Pfost test en divide it by the initial addition level of the tracer in the coating step. Than this value was multiplied by 100%.

Due to inhomogeneity and segregation values of more than 100% can occur. This happens with all analyses where the active components are stable during processing. The effects of adding different kinds of fully hydrogenated fat or wax is shown in Table 2.

**Table 2**

| Coating fat | % Premix | % fat | Psize | carrier | Pfost | % Recovery |
|---|---|---|---|---|---|---|
| 100% Fishoil | 1 | 2 | Fine | flour | 96.0 | 87.5 |
| 20% FHR/80% Fishoil | 1 | 2 | Fine | flour | 98.0 | 99.7 |
| 100% Fishoil | 2 | 2 | Fine | flour | 92.6 | 68.5 |
| 100% FHR | 2 | 2 | fine | flour | 94.6 | 70.3 |
| 50% FHR/50% Fishoil | 2 | 2 | fine | flour | 94.6 | 74.1 |
| 20% Carnaubawax/80% Fishoil | 2 | 2 | fine | flour | 93.4 | 75.4 |
| 20% FHR/80% Fishoil | 2 | 2 | Fine | flour | 96.1 | 85.1 |
| 100% Fishoil | 2 | 2 | Fine | bran | 94.6 | 80.8 |
| 20% FHR/80% Fishoil | 2 | 2 | Fine | bran | 95.4 | 83.7 |
| 100% Fishoil | 2 | 2 | Coarse | bran | 97.4 | 36.3 |
| 20% FHR/80% Fishoil | 2 | 2 | Coarse | bran | 94.4 | 49.4 |
| 100% Fishoil | 2 | 2 | Coarse | flour | 96.0 | 49.6 |
| 20% FHR/80% Fishoil | 2 | 2 | Coarse | flour | 97.6 | 75.8 |
| 100% Fishoil | 2 | 4 | Fine | flour | 95.0 | 82.6 |
| 20% FHR/80% Fishoil | 2 | 4 | Fine | flour | 99.0 | 108.8 |
| 20% FHR/80% Fishoil | 4 | 2 | Fine | flour | 97.0 | 83.8 |
| 100% Fishoil | 4 | 2 | Fine | flour | 95.6 | 85.8 |

| | | | | | | |
|---|---|---|---|---|---|---|
| - FHR: Fully hydrogenated rape seed oil - % Premix: amount of premix to be attached to the feed, 2 or 4% of fat - % Fat: amount of fat used to coat the feed 2 or 4% fat - Psize: size of the particle to be attached to the feed (coarse (300 um) or fine (100 um) - Carrier: the material that is mixed with the medicine (flour or bran) | | | | | | |

### Example 2

Table 3 shows the recovery results in tests wherein the effect of adding different kinds of hardening lipids in the fat blend where investigated. All tests were done with a 2% fat coating on total weight basis.

**Table 3**

| Coating | % Premix | Psize | Carrier | Pfost | % Recovery |
|---|---|---|---|---|---|
| 100% Palm oil | 1 | Fine | Flour | 99.2 | 45.6 |
| 20% FHR/80% Soybean oil | 1 | Fine | Flour | 99.8 | 80.4 |
| 20% FHR/80% palm oil | 1 | Fine | Flour | 100.0 | 97.9 |
| 100% Palm oil | 2 | Coarse | Flour | 99.4 | 50.7 |
| 20% carnaubawa/80% soybean oil | 2 | Coarse | Flour | 99.6 | 87.7 |
| 20% FHR/80% palm oil | 2 | Coarse | Flour | 99.6 | 89.0 |
| 20% FHR/80% Soybean oil | 2 | Coarse | Flour | 99.4 | 98.2 |
| 20% carnaubawa/80% palm oil | 2 | Fine | Bran | 99.8 | 67.7 |
| 100% Palm oil | 2 | Fine | Bran | 99.2 | 71.1 |
| 20% FHR/80% Soybean oil | 2 | Fine | Bran | 99.0 | 81.8 |
| 20% FHR/80% palm oil | 2 | Fine | Bran | 99.6 | 85.2 |
| 100% Soybean oil | 2 | Fine | Flour | 98.6 | 37.9 |
| 100% POFA | 2 | Fine | Flour | 99.6 | 75.9 |
| 100% Palm oil | 2 | Fine | Flour | 99.2 | 81.4 |
| 50% FHR/ 50% Soybean oil | 2 | Fine | Flour | 100.0 | 86.0 |
| 20% FHR/80% Soybean oil | 2 | Fine | Flour | 99.6 | 88.0 |
| 20% FHR/80% palm oil | 2 | Fine | Flour | 99.8 | 88.7 |
| 20% carnaubawa/80% soybean oil | 2 | Fine | Flour | 99.8 | 92.1 |
| 20% FHR/80% soja olie | 4 | Fine | Flour | 99.6 | 67.3 |
| 100% Palm oil | 4 | Fine | Flour | 99.4 | 84.4 |
| 20% FHR/80% palm oil | 4 | Fine | Flour | 99.6 | 91.0 |

| | | | | | |
|---|---|---|---|---|---|
| - POFA: Palm Oil Fatty Acids | | | | | |

The final effect of the coating also depends on the initial quality of the feed. The addition of the coating improves the durability of the feed and in this way reduces the formation of dust forming.

### Example 3

The effect of adding a fully hydrogenated fat was investigated. The results are shown in Table 4.

**Table 4**

| **Coating** | **wt.% fat** | **Recovery %** |
|---|---|---|
| 50% FHR / 50% PO | 0.50 | 86.0 |
| 100% PO | 0.75 | 80.0 |
| 50% FHR / 50% PO | 0.75 | 89.0 |
| 33% FHR /67% PO | 0.75 | 96.0 |
| 100% Soy oil | 1 | 14.8 |
| 50% PO / 50% Soy oil | 1 | 57.0 |
| 100% PO | 1 | 86.0 |
| 25% FHR / 75% PO | 1 | 90.3 |
| 33% FHR /67% PO | 1.5 | 93.7 |
| 25% FHR / 50% PO / 25% Soy oil | 2 | 90.7 |
| 100% PO | 2 | 91.0 |
| 33% FHR /67% PO | 2 | 92.8 |
| 25% FHR /75% PO | 2 | 102.5 |

### Analysis of the hardness of the fat blends

If the fat blend contains 2 wt.% of the hardening lipid, the crystallization speed is doubled (see Table 5). If the fat blend contains 5 wt.% of the fully hydrogenated fat or wax the crystallization speed is already three times higher. Several more crystallization rates were recorded as presented in Table 5. These data show the effect of adding the hardening lipid compared to an other fat having a lower melting point than 55 °C.

**Table 4**

| Palm oil % | FHR % | Hard fat1 % | Hard fat2 % | Hardness (kg) | Crystallization time (min) | Times faster than PO (palm oil) |
|---|---|---|---|---|---|---|
| 100 | 0 | 0 | 0 | 8.6 | 29 | 1.0 |
| 0 | 100 | 0 | 0 | 70.0 | 3 | 9.7 |
| 0 | 0 | 100 | 0 | 22.7 | 20 | 1.5 |
| 0 | 0 | 0 | 100 | 22.9 | 16 | 1.8 |
| 25 | 75 | 0 | 0 | 60.0 | 4 | 7.3 |
| 50 | 50 | 0 | 0 | 37.3 | 4 | 7.3 |
| 75 | 25 | 0 | 0 | 26.7 | 6 | 5.0 |
| 90 | 10 | 0 | 0 | 18.0 | 8 | 3.5 |
| 95 | 5 | 0 | 0 | 21.1 | 10 | 3.0 |
| 98 | 2 | 0 | 0 | 14.6 | 16 | 2.0 |
| 75 | 0 | 25 | 0 | 15.4 | 27 | 1.1 |
| 90 | 0 | 10 | 0 | 13.4 | 28 | 1.0 |
| 75 | 0 | 0 | 25 | 11.8 | 23 | 1.3 |
| 90 | 0 | 0 | 10 | 13.4 | 27 | 1.1 |

| | | | | | | |
|---|---|---|---|---|---|---|
| - Hard fat1: Commercial hard frying fat; 100% fat blend of palm oil fractions; 53% saturated fats, 45% unsaturated fat and 2% transfat. - Hard fat2: Commercial hard frying fat; 100% vegetable fat, 45% saturated fats, 35% mono-unsaturated fats, 15% poly unsaturated fats, 5% trans fats. | | | | | | |

## Claims

1. Animal feed comprising at least one active compound and a coating for adhering the at least one active compound to the animal feed, wherein the coating comprises a fat blend of at least two lipid components, wherein at least one of the lipid components comprises a hardening lipid, and wherein the lower limit of the crystallization range of said blend is above room temperature.

2. Animal feed according to claim 1, wherein the lower limit of the crystallization range of the blend is above 35 °C.

3. Animal feed according to any of the previous claims, wherein the fat blend comprises from 0.2 wt.% to 3.0 wt.% of a fully hydrogenated fat and/or a wax as hardening lipid on the total weight basis.

4. Animal feed according to any of the previous claims, wherein, wherein the fat blend further comprises a vegetable oil and/or animal fat, such as soybean oil, palm oil or fish oil.

5. Animal feed according to any of the previous claims, wherein the weight ratio of hardening lipid to other lipids in the fat blend is from 99:1 to 10:90.

6. Animal feed according to any of the preceding claims, wherein the at least one active compound is chosen from the group consisting of therapeutics, prophylactics, enzymes, vitamins, yeasts, and combinations thereof.

7. Animal feed according to any of the preceding claims, comprising from 0.2 wt.% to 3 wt.% of the coating, preferably from 0.5 wt.% to 2 wt.%, and more preferably from 0.7 wt.% to 1.0 wt.%. on total weight basis

8. Animal feed according to any of the preceding claims, wherein the at least one active compound is in the form of a solid particle having a size of from 1 µm to 2 000 µm, preferably from 50 µm to 200 µm.

9. Animal feed according to any of the preceding claims, wherein the fully hydrogenated fat is rape seed oil.

10. Animal feed according to any of the previous claims, wherein said fat blend comprises a fat-gel.

11. Method for preparing an animal feed according to any of the previous claims, wherein comprising the steps of:
- providing an animal meal;
- producing animal feed of the meal (pellets, crumbles or meal) and distributing them to a mixing device;
- mixing the at least one active compound with the animal feed;
- heating the fat blend above the melting range of the fat blend; and
- spraying the mix of at least one active compound with the fat blend over the animal

12. Method according to the previous claim, wherein the fully hydrogenated fat is sprayed on the feed at a temperature of between 50 °C and 95 °C, preferably between 60 °C and 90 °C, more preferably between 75 °C and 85 °C.

13. Use of a fully hydrogenated fat or a wax with a melting point above 50 °C, preferably above 65 °C as an adherent for at least one active compound on animal feed.
